# EUROPEAN PATENT SPECIFICATION

(11) **EP 3 889 275 B1**
(45) Date of publication and mention of the grant of the patent: **22.11.2023**
(21) Application number: 20167086.6
(22) Date of filing: 31.03.2020
(51) Int. Cl.: C21B 13/00, F27B 3/18, F27D 13/00, C21B 11/08, C21B 13/12, C21B 11/10, C22B 13/00, C22B 15/00

(54) **SKYFLASH MULTIPHASE FLOW METALLURGICAL FURNACE**
MEHRPHASENSTRÖMUNGSMETALLURGIEOFEN
FOUR MÉTALLURGIQUE À ÉCOULEMENT MULTIPHASIQUE

(43) Date of publication of application: 06.10.2021
(73) Proprietor: Qiu, Jiangbo, 8011 Pafos (CY)
(72) Inventor: Qiu, Jiangbo, 8011 Pafos (CY)
(74) Representative: Lermer, Christoph

(56) References cited:
- CN-A- 105 861 834
- CN-B- 104 634 101
- CN-B- 105 861 834
- DE-B- 1 244 819

## Description

### Field of the Invention

The invention belongs to the field of metallurgical furnaces, and particularly relates to a skyflash multiphase flow metallurgical furnace.

### Background of the Invention

Both the basic principle of chemical reactions and the practice of metallurgical production show that one of the most effective methods to improve metallurgical efficiency is stirring, which allows various substances participating in the reactions to get more opportunities to make contact, thus completing the chemical reactions quickly.

In the field of pyrometallurgy, since a metallurgical furnace is usually in a harsh environment of high temperature and high corrosion, there are very limited methods to realize charging and stirring at the same time. Only top blowing, bottom blowing and side blowing have been successfully applied in the prior art. Top blowing, bottom blowing and side blowing are all realized by adding smelting raw materials into a furnace through high-pressure carrier gas while high-pressure air flow is blown into the melt to provide stirring. These technologies have the disadvantages of poor stirring effect and high energy consumption.

Document DE 1244819 B discloses a metallurgical furnace , comprising a funnel, a melting chamber, a reduction zone and a smelting pool, which are sequentially communicated. The reduction zone is composed of a plurality of pipes which are communicated with each other. Document DE 1244819 B introduces a shaft furnace composed of preheating, roasting, reduction and melting zone, which is used to melt iron ore into iron. In the smelting process, the prior art is to heat the ore powder first, then reduce it, and finally melt it. The reduction process is to mainly use the reduction gas to reduce the solid iron ore before melting, and the reduction effect is poor.

### Summary of the Invention

In view of this, the invention aims to provide a skyflash multiphase flow metallurgical furnace, as set forth in the appended claims, fundamentally solving the problems of large energy consumption, large pollution and low safety of the existing metallurgical process.

In order to achieve the above purpose, the invention adopts the following technical scheme:
A skyflash multiphase flow metallurgical furnace comprises an ore bin, a melting chamber, a descending pipe vessel and a smelting pool which are sequentially communicated from top to bottom; and
The descending pipe vessel is composed of a plurality of obliquely arranged straight pipes or spirally descending curved pipes which are communicated with each other, the adjacent pipes are staggered, and the pipes are provided with feeding nozzles.

The included angle between the straight pipes and the horizontal plane is less than 45°.

A tank-shaped rectifying vessel is arranged between the descending pipe vessel and the smelting pool. An upper opening and a lower opening of the rectifying vessel are circular, and the diameter D of the lower opening is 0.5 to 1.2 times of the diameter M of the upper opening. The pipe connected with the upper opening is tangent to the upper opening, so that the melt forms a vortex when entering the upper opening.

Preferably, the pipes are all straight, but the joints of the pipes are designed into arcs. Preferably, the spaced pipes in the descending pipe vessel are arranged in parallel. Preferably, the cross section of each pipe is rectangular or elliptic.

Preferably, the inner wall of the pipe is a glossy surface, a step surface or wave surface. Preferably, the setting direction of the feeding nozzles is opposite to the flow direction of the melt.

Preferably, the feeding nozzles are arranged at the joints of the adjacent pipes.

The melting chamber adopts chemical heating, the lower end of the melting chamber is provided with an ore melting bath, combustion spray guns are arranged on the side wall of the melting chamber, and the lower part or/and the side end of the ore melting bath is/are provided with a discharge port. The combustion spray guns include horizontal spray guns and inclined spray guns, wherein the horizontal spray guns and the inclined spray guns are arranged alternately.

The smelting pool is provided with a waste gas discharge port, a waste residue discharge port, a metal discharge port and a metallurgical raw material adding port. The metallurgical raw material adding port is arranged on the upper side and/or the side wall of the smelting pool, and the side wall inlet is arranged below the melt liquid surface so that metallurgical raw materials can directly enter the melt.

An inclined surface is arranged on the lower one of two adjacent pipes in the descending pipe vessel and is located at a position corresponding to the melt falling from the upper pipe into the lower pipe, and the included angle between the inclined surface and the horizontal plane is θ, 5°≤θ≤25°.

Ordinary steel plate, stainless steel or pure copper can be used as cooling wall and metallurgical slag material can be used as inner wall protection layer for the melting chamber and the descending pipe vessel. Some composite materials can also be directly used as the pipe wall of melting chamber and the descending pipe vessel.

The technical scheme of the invention is briefly described as follows: ore materials to be smelted, flux and other materials for smelting are prepared and mixed in proportion, and then stored in the ore bin, and the raw materials will be all melted into the melt after falling into the melting chamber from the ore bin. After flowing into the descending pipe vessel, the melt continuously turns and flows downwards in a spiral downward curved pipe or a downward inclined straight pipe, and various chemical components in the melt are continuously mixed, make contact and generate chemical reaction. The reaction continues throughout the flowing process of the melt in the descending pipe vessel. When the melt leaves the descending pipe vessel, the main metallurgical process has been completed. The descending pipe vessel adopts a unique design, which can restrict the melt flowing down from the melting chamber to flow in a fixed path and metallurgical environment. By reasonably designing the gradient of the vessel, the flow, tumbling and stirring of the melt can be realized only by gravity on the one hand, and on the other hand, the flowing time of the melt in the pipes is prolonged as much as possible. In addition, if necessary, auxiliary raw materials or fuel (such as reducing gas, oxygen, pulverized coal, etc.) can be added to the descending pipe vessel through the feeding nozzles to enable the metallurgical process to proceed smoothly.

Compared with the prior art, the invention has the following beneficial effects:
On the premise that no additional energy consumption is caused, the melt is stirred during flowing by utilizing the gravity of the melt, so that various materials in the melt can be fully mixed and contacted, thereby improving smelting efficiency and product quality and reducing energy consumption.

### Brief Description of the Drawings

Fig. 1 is a schematic view of the overall structure of a skyflash multiphase flow metallurgical furnace according to the present invention;
Fig. 2 is a microscopic schematic view of melt in a descending pipe vessel according to the present invention;
Fig. 3 is a schematic view of a melting chamber according to the present invention;
Fig. 4 is a schematic view of flow-stirring of the melt in the descending pipe vessel according to the present invention;
Fig. 5-6 is a cross-sectional view of the skyflash multiphase flow metallurgical furnace according to the present invention;
Fig. 7 is a structural view showing an inclined surface disposed on a pipe of the descending pipe vessel according to the present invention;
Fig. 8 is a structural view of the skyflash multiphase flow metallurgical furnace with a tank-shaped rectifying vessel according to the present invention;
Fig. 9 is a top view of the tank-shaped rectifying vessel according to the present invention.
Fig. 10 is one of the process flow diagrams of the net zero emission steelmaking process constructed by the core equipment of the skyflash multiphase flow metallurgical furnace.
Fig. 11 is the second diagram of the process flow of the net zero emission steelmaking process constructed by the core equipment of skyflash multiphase flow metallurgical furnace.

### Detailed Description of the Invention

In order to enable those skilled in the art to better understand the technical scheme of the present invention, the present invention will be described in further detail below with reference to the accompanying drawings and preferred embodiments.

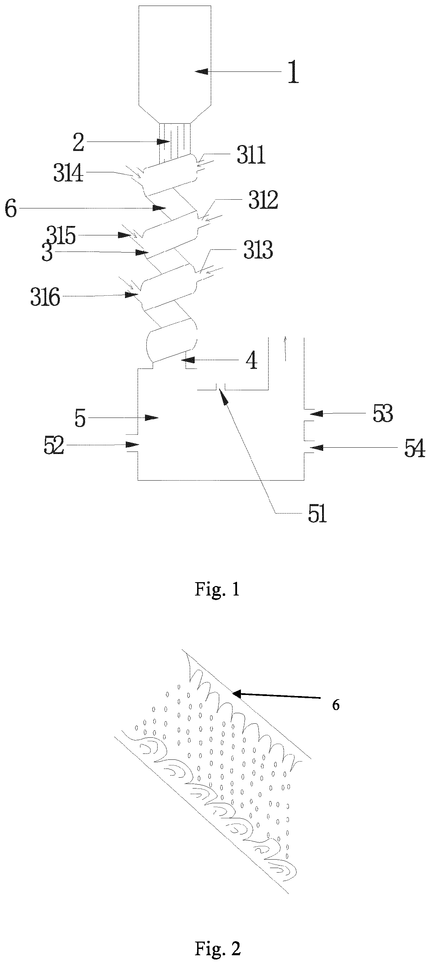

Fig. 1 shows a skyflash multiphase flow metallurgical furnace, which comprises an ore bin 1, a melting chamber 2, a descending pipe vessel 3 and a smelting pool 5 which are sequentially communicated from top to bottom.

The shape of the melting chamber is cylindrical, and the heating mode of the melting chamber is chemical heating or electric heating.

When the heating mode is electric heating, the lower end of the melting chamber is provided with an ore melting bath for receiving ore materials or melted ore materials, and the lower part or/and the side end of the ore melting bath is/are provided with a discharge port. Blocky or powdery raw materials in the ore bin are electrically heated and melted into liquid melt in the ore melting bath.

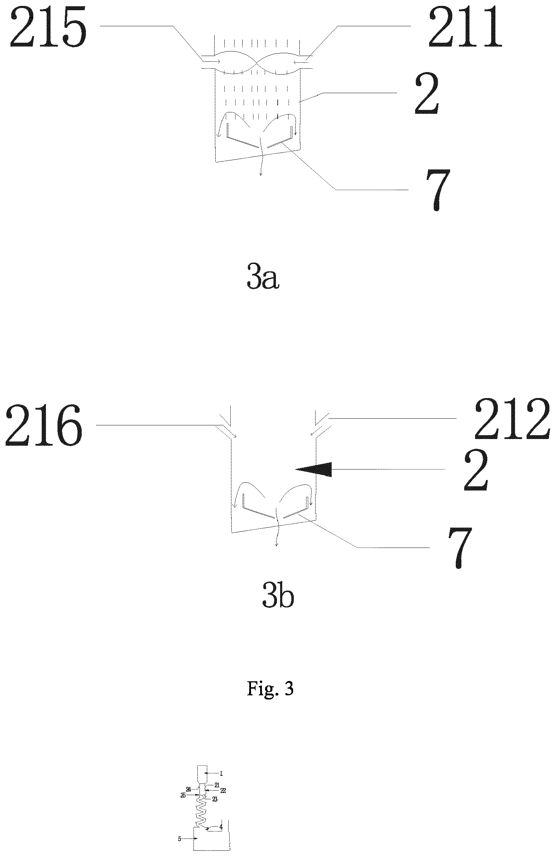

When the heating mode is chemical heating, the lower end of the melting chamber is provided with an ore melting bath, combustion spray guns are arranged on the side wall of the melting chamber, and the lower part or/and the side end of the ore melting bath 7 is/are provided with a discharge port. The combustion spray guns include horizontal spray guns and inclined spray guns, wherein the horizontal spray guns and the inclined spray guns are arranged alternately. Preferably, there are four horizontal spray guns and four inclined spray guns, which are uniformly arranged on the peripheral wall of the melting chamber, and are used for blowing combustion flames into the melting chamber. The horizontal spray guns 211 and 215 and the remaining two horizontal spray guns spray towards each other (shown in Fig. 3a) to melt the ore falling from the ore bin. The inclined spray guns 212 and 216 and the remaining two inclined spray guns spray downwards obliquely (shown in Fig. 3b). The tip of the flame is sprayed on the melt liquid surface in the ore melting bath to realize complete melting and form a good liquid flow.

The melt is generally discharged from the lower discharge port 62 of the ore melting bath 7 to enter the descending pipe vessel 3. Of course, the melt can also be discharged from a side outlet 63 when necessary, and in this case, a melt inlet of the descending pipe vessel is located below the outlet 63. The advantage of discharging from the side outlet 63 is that the flow rate is easy to control.

The descending pipe vessel comprises a plurality of obliquely arranged straight pipes or spirally descending curved pipes 6 which are communicated with each other, the adjacent pipes are staggered. Preferably, the spaced pipes in the descending pipe vessel are arranged in parallel. It should be noted that the descending pipe vessel can be composed of all straight pipes connections, or all curved pipes connections, or some straight pipes and some curved pipes connections.

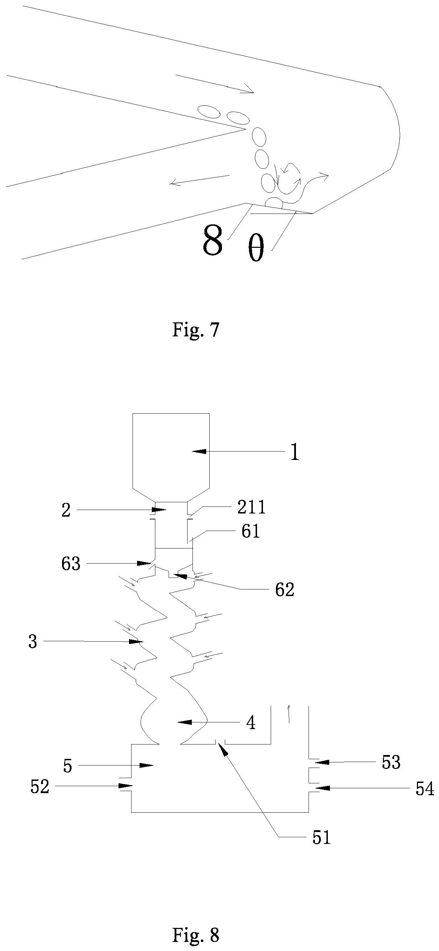

According to a preferred scheme, the pipes 6 are all straight, but the joints of the pipes are designed into arcs. The included angle between the straight pipes and the horizontal plane is less than 45°(as shown in Fig. 7). A preferred scheme is that the included angle is greater than 7°and less than 15°, thereby ensuring that the melt can flow along the pipes at a low average speed, and there will be no blockage due to too small flow rate, and the situation that the reaction efficiency is affected due to uneven mixing of reactants caused by an over-high flow rate is also avoided.

The number of the pipes 6 in the descending pipe vessel is generally 3-7, but in order to achieve the desired metallurgical effect, there can also be more than 7 pipes.

The cross section of the pipe is one of rectangle, ellipse or circle.

The inner wall of the pipe is a glossy surface, a step surface or a wave surface, as shown in Fig. 2.

The pipe is provided with a plurality of feeding nozzles at different positions (as shown in Fig. 1, there are 6 nozzles in total, 311, 312, 313, 314, 315 and 316). The number of nozzles and the injection position can be designed according to the needs of smelting to add auxiliary materials for smelting to the descending pipe vessel or to supplement heat for the descending pipe vessel, such as one or more of the reduction gas, oxygen and pulverized coal. The nozzles arranged at different positions can be used for adding different auxiliary materials. Of course, the feeding nozzles can also be closed when auxiliary materials do not need to be supplemented.

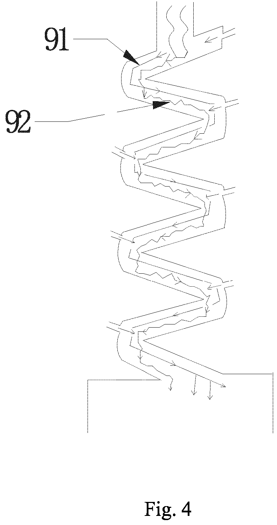

According to a preferred scheme, the feeding nozzles are arranged at the joints of adjacent pipes. The injection direction of the feeding nozzles may be the same as the flow direction of the melt (as shown in Fig. 4), or may be opposite to the flow direction of the melt, or perpendicular to the flow direction of the melt, wherein injecting reactants against the flow direction of the melt is the best scheme, which can delay the flow rate of the melt on the one hand, and can mix the injected reactants with the melt more uniformly on the other hand.

As shown in Fig. 4, the melt discharged from the melting chamber enters the descending pipe vessel, a melt flow 92 flows downwards along the obliquely arranged pipes, and the flow rate will be greatly reduced at the turning points where the pipes are connected, but will be increased again when the melt flow enters the lower pipe, and so forth. If the melt turns frequently, the mixing effect of each chemical component in the melt will be better, and the average flow rate of the fluid will be slower, i.e. in the path of unit length, the residence time of the melt is longer, which enables chemical reactions to be fully carried out and is conducive to improving the metallurgical efficiency in unit volume. When necessary, gas auxiliary materials can be injected from the feeding nozzles, in this way, the melt flow 92 is continuously passed through by a gas flow 91 in the process of falling in a waterfall shape, which provides a good gas-liquid contact condition, thus promoting the rapid progress of the gas-liquid reaction. If the reaction gas is injected against the flow direction of the melt (i.e. the setting direction of the feeding nozzles is opposite to the flow direction of the melt) and is sprayed on the melt, the flow rate of the melt can be further reduced, meanwhile, the melt is splashed to obtain a larger gas-liquid contact surface area, thus further improving the metallurgical efficiency.

The smelting pool 5 is provided with a waste gas discharge port, a waste residue discharge port 54, a metal discharge port 53 and a metallurgical raw material adding port. The metallurgical raw material adding port is arranged on the upper side and/or the side wall of the smelting pool to form an upper inlet 51 and/or a side wall inlet 52. The metallurgical raw material adding port on the side wall is arranged below the melt liquid surface so that metallurgical raw materials can directly enter the melt.

An inclined surface 8 is arranged on the lower one of adjacent pipes in the descending pipe vessel, as shown in Fig. 7 (Fig. 7 is the partial structure of Fig. 4). When the melt passes through the arc-shaped transition joint between the pipes and falls to the lower pipe, due to the blocking of the inclined surface, part of the melt no longer flows downwards obliquely along the pipe, but moves in the opposite direction; and due to its own gravity and the blocking of the pipe wall at the joint of the pipes, the flow rate of the melt drops to zero, but soon, the melt turns to flow downwards obliquely again along the pipe. For the arrangement position of the inclined surface, a preferable option is: the inclined surface is arranged at a position corresponding to the melt falling from the upper pipe into the lower pipe, and the included angle between the inclined surface and the horizontal plane is θ,5°≤θ≤25°.

In this process, due to the two turns of the melt, the melt tumbles up and down, which actually has a better stirring effect. Meanwhile, due to the arrangement of the inclined surface, the flow rate decreases to zero when the melt flows through the joint of the pipes, and increases again from zero, so that the retention time of the fluid in the descending pipe vessel is relatively long, which is conducive to the improvement of smelting efficiency of the gradually decreasing pipeline container. If the chemical reaction speed in the descending pipe vessel is extremely high and the retention time does not need to be prolonged, the gradient of pipes in the descending pipe vessel can be increased or the number of pipes of the descending pipe vessel can be reduced in the design phase.

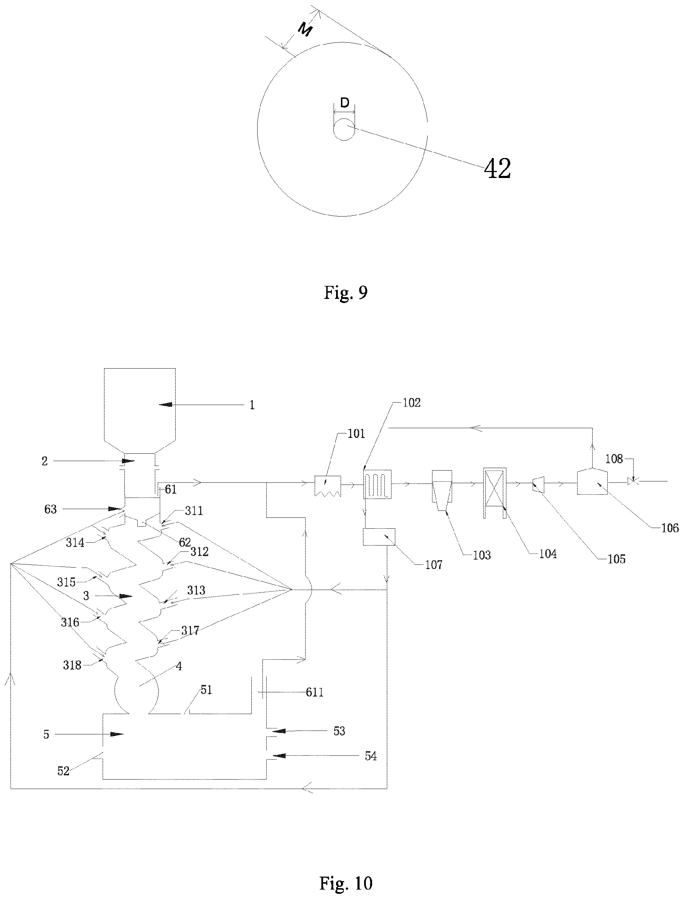

As shown in Fig. 8, a tank-shaped rectifying vessel 4 is arranged between the descending pipe vessel and the smelting pool. An upper opening and a lower opening of the rectifying vessel are circular, and the diameter D of the lower opening is 0.5 to 1.2 times of the diameter M of the upper opening. The pipe connected with the upper opening is tangent to the upper opening, so that the melt forms a vortex when entering the upper opening. The top view of the tank-shaped rectifying vessel is shown in Fig. 9. In the figure, the lowermost pipe in the descending pipe vessel is connected with the rectifying vessel in a horizontal tangential direction, but in practice, more often the descending pipe vessel is located above the rectifying vessel 4, and the lowermost pipe is obliquely connected with the tangential direction of the rectifying vessel at a certain downward inclination angle. Keeping the flow rate of flue gas stable is one of the important conditions to ensure the normal and continuous production in the metallurgical process. The main function of the rectifying vessel is to stabilize the flow rate of flue gas at an outlet, and a certain melt stirring effect can also be realized by the rectifying vessel. Specifically, the flue gas and the melt enter the rectifying vessel in the tangential direction to form a swirling material flow in the rectifying vessel, so as to fully stir the melt; besides, the rectifying vessel also plays a buffering role on the flue gas discharged from the descending pipe vessel to enable it to enter a smelting pool flue at a stable flow rate. The melt and the flue gas are finally discharged from an outlet 42 formed at the bottom of the rectifying vessel and enter the smelting pool. During design, the pressure in the descending pipe vessel can be adjusted by adjusting the ratio of the outlet diameter D to the inlet diameter M of the rectifying vessel.

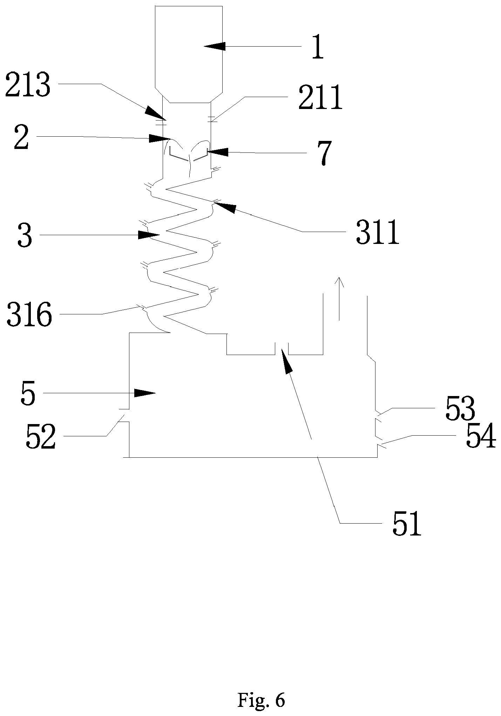

In addition, in order to reduce investment and the complexity of a system, a straight pipe 4 with a sudden increase in diameter may be arranged between the descending pipe vessel and the smelting pool instead of a tank-shaped rectifying vessel, so as to buffer the pressure of the lower outlet of the descending pipe vessel, as shown in Figs. 1, 5 and 6. The melting chamber and the descending pipe vessel adopt common steel plates, stainless steel or pure copper as the cooling wall material. The characteristics of the skyflash multiphase flow metallurgical furnace are that a large metallurgy amount needs to be realized in a very small space, the erosion of a vessel wall by the melt is very serious, and when the furnace temperature reaches 1600°C, general refractory materials cannot meet the requirements of furnace building. A practical solution to the above problems is that the high-temperature part of the whole metallurgical furnace adopts a water-cooled wall, and a slag crust protective layer is formed in the furnace wall to resist slag, thus meeting the working condition requirements very well. For example, in the melting chamber shown in Fig. 3, an outer wall of the melting chamber uses ordinary steel plates or pure copper as a cooling wall, the direct spraying towards ore powder and the melt in the ore melting bath by the combustion spray guns will cause massive melt splashing, which is very beneficial to slag adhering on the cooling wall, so that a continuous, compact and properly thick slag crust protective layer is formed on an inner wall of the whole melting chamber, which not only solves the problem of erosion, but also improves the strength of the equipment.

For the descending pipe vessel, the same water-cooled wall design as that of the melting chamber is adopted. Due to frequent dropping of the melt and blowing and stirring of the feeding nozzles, massive melt splashing is caused in the narrow space of the pipes. The whole water-cooled wall is provided with sufficient slag adhering materials, and a slag crust protective layer integrated with the pipe vessel is formed in the pipes to ensure that the metal material for constructing the pipes always operates at a low temperature, thus prolonging the service life of the equipment. Usually, there are sufficient slag adhering materials in the ore materials to be smelted, and slag adhering materials can also be added through the feeding nozzles to form a slag crust protective layer with richer performance. Some composite materials can also be directly used as pipe walls for the melting chamber and the descending pipe vessel. If the furnace temperature is below 1600°C, there are mature materials available in the market at present, whether in a reducing environment or an oxidizing environment. For example, a composite material of "silicon carbide fiber composite silicon carbide" is selected, and the whole high-temperature part of the metallurgical furnace is constructed of this material without cooling walls or lining refractory materials. The mechanical strength, corrosion resistance, erosion resistance and other properties of the material meet the smelting requirements. Although the unit price of the composite material is high, the technological system of the skyflash multiphase flow metallurgical furnace simplifies the smelting process, so compared with a traditional metallurgical process system constructed with low unit price materials, the material consumption is greatly reduced and the total investment is less. Therefore, the scheme of building the skyflash multiphase flow metallurgical furnace with the composite material is feasible in practical application.

### Specific embodiment 1: smelting iron and steel with a skyflash multiphase flow metallurgical furnace

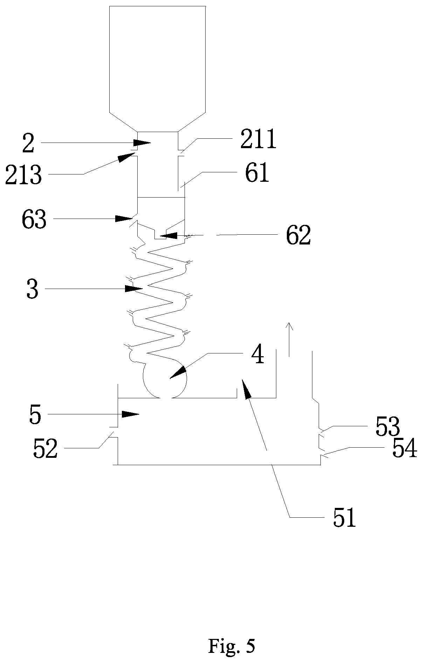

As shown in Fig. 5, the lower part of a melting chamber 2 is provided with an ore melting bath, which has two outlets, a bottom outlet 62 and a side outlet 63, a descending pipe vessel is located directly below the ore melting bath, and the melt discharged from the bottom outlet 62 of the ore melting bath enters the descending pipe vessel. Meanwhile, the melting chamber is also provided with a smoke exhaust port 61, which is externally connected with a flue to discharge the flue gas out of the melting chamber 2.

The specific process is as follows:
Preparation of raw materials: crushing to make the particle size of 80% iron concentrate powder smaller than 200 meshes, preparing and mixing ore powder to be smelted, flux and pulverized coal in proportion to obtain mixed ore powder and storing the mixed ore powder in an ore bin.

The melting chamber adopts chemical heating, and fuel and oxygen-containing gas are injected through horizontal spray guns 211 and 215 and inclined spray guns 212 and 216 (the remaining four are not shown) to heat the melting chamber till the temperature is above 1400°C. The fuel injected through the spray guns is one or more of natural gas, coal gas, heavy oil and pulverized coal. The ratio of oxygen to fuel is controlled to make the atmosphere in the melting chamber be a strong reducing atmosphere. The mixed ore powder is fully melted into the melt in the melting chamber, and reduction and slagging also occur in the process.

The melt flows into the descending pipe vessel. During the downward flow in the inclined pipes, reducing gas, such as CO and H₂, preferably high-temperature gas (for example, containing H₂ 23%, CO 67%, CO₂ <3%) is injected into the vessel through feeding nozzles 311-316 arranged on the side walls of the pipes in the reverse direction. The gas can be provided by a coal gasification chamber working next to the skyflash multiphase flow metallurgical furnace. The produced gas is directly delivered to the descending pipe vessel without cooling. The melt flow of the mixed ore contacts and collides with the high-temperature and high-concentration reducing gas, the melt adheres to the inclined wall of the descending pipe vessel and flows down in a tumbling mode, the components in the melt flow are fully stirred, and a huge contact surface with the reducing gas is formed at the same time, and the iron concentrate is basically reduced when leaving the descending pipe vessel.

The microscopic process is as follows: the melt is subjected to gravity, gas resistance and friction force of the vessel wall in the pipes of the descending pipe vessel, and the melt on the upper part of the pipe is in a hanging and downward sliding state, and the sliding process is accompanied by dripping. Due to the difference in density, there is always a relative movement between iron oxide which floats up and iron which sinks down in the melt, and due to the difference in the viscosity of iron and iron oxide, the surface of the melt dominated by iron oxide is pulled off during sliding of the melt, forming gourd-shaped droplets (as shown in Fig. 2). Each droplet tumbles during sliding, thus making full contact with the reducing gas, in this way, the iron oxide on the surface of the droplet immediately reacts with the reducing gas to generate liquid metal melted iron. As the density of the liquid iron oxide is smaller than that of the melted iron, the iron oxide in the droplet can rapidly float to the surface of the droplet under the action of buoyancy, and the falling and sliding of the droplet accelerate the floating of the iron oxide, and the floating iron oxide is then rapidly reduced, and so forth. As long as the iron oxide floating on the surface of the melt is reduced, the iron oxide inside the droplet will roll out again and float to the surface of the melt to react with the reducing gas. The metallurgical device thus constructed ingeniously utilizes the effects of gravity and chemical reactions to create a rapidly updated huge surface area for the melt participating in the reaction, thus ensuring that the reduction reaction of iron oxide can be carried out quickly and efficiently.

In the chemical reaction between the liquid iron oxide and the reducing gas, the iron oxide with a low density floats on the surface of the melt, and the molecular number on the unit surface area of its outer surface (which can make contact with the reaction gas) is much larger than the molecular number of the iron oxide on the surface of solid ore powder particles, and the situation that solid reaction products on the surface of the solid particles hinder the diffusion of the reducing gas and the gaseous products in the gas-solid reaction is avoided. The metallurgical device constructed in this way has a "gas-liquid reaction" speed higher than the "gas-solid reaction" speed of suspension metallurgy, and the reduction rate is higher within the same time period.

For example, within the same time period (within 2-3 seconds), the reduction rate of gas-solid reaction of flash metallurgy is about 70%, while the reduction rate of gas-liquid reaction of the skyflash multiphase flow metallurgical furnace of the invention can be more than 90%, and in the same size of space, the processing capacity of the skyflash multiphase flow metallurgical furnace is much larger than that of the flash furnace.

The melt which is subjected to the reduction reaction in the descending pipe vessel falls into the smelting pool, and pulverized coal and oxygen are sprayed into the melt through side blowing, so as to provide necessary heat for the smelting pool to complete slagging, slag-iron separation, and slag discharge, and molten iron or steel discharge.

In the whole process of skyflash multiphase flow metallurgical furnace, there are many means and interfaces reserved to adjust the furnace condition, which can easily and accurately add materials that affect the metallurgical effect. It is a very flexible and adaptable metallurgical equipment, which is the biggest advantage different from the existing metallurgical equipment.

Specific embodiment 2: typical application I of net zero emission steelmaking process constructed with "skyflash multiphase flow metallurgical furnace" as the core equipment. As shown in Figure 10, there are two ways of flue gas discharged from the skyflash multiphase flow metallurgical furnace, namely 61 and 611. After the two ways of flue gas converged, they first enter a dust chamber 101 to remove the large particles of dust. Then the flue gas enters the high-temperature heat exchanger 102. After heat exchange and cooling, the flue gas enters the dust remover 103. After fine dust removal, the flue gas is pressurized to the chemical removal equipment 105 by the fan 104 to remove harmful impurities such as sulfur and get the raw gas. The main components of the raw gas are CO, H₂ and CO₂, and then the raw gas is sent to the gas storage tank 106 for storage.

After adjusting to the required pressure, the raw gas from the gas storage tank 106 is sent to the high temperature heat exchanger 102, which is used as the cold medium to exchange heat with the flue gas of about 1450°C formed by the combination of 61 and 611. The temperature of the raw gas can be raised to over 1000°C after heat exchange by high temperature heat exchanger 102, and then the high temperature raw gas is sent to gas reforming device 107. In the reforming unit, most of the CO₂ in the raw gas is converted into CO through catalytic reaction, so that the volume ratio of (CO + H₂) in the output gas of 107 is greater than 90%.

After purification and reforming, all the flue gas from the skyflash multiphase flow metallurgical furnace can be digested and used by the furnace itself. In this process, there is no carbon emission, and the net zero emission is achieved. However, most of the heat energy and chemical energy in the flue gas are digested by the smelting process, so as to achieve the highest efficiency of energy conservation and emission reduction. In addition, compared with the conventional reforming device, the temperature of the raw gas entering 107 in this embodiment is higher, which can make the reforming reaction more efficient, and no additional energy consumption is needed to heat the reforming device 107, which makes full use of the heat energy carried by the raw gas itself and reduces the energy consumption.

In addition, the gas storage tank 106 is connected with other gas systems through the control valve 108, which can output gas to other gas systems or receive gas from other gas systems. "Output" or "reception" depends on the energy balance of the net zero emission steelmaking process system constructed by the skyflash multiphase flow metallurgical furnace.

The process of steelmaking in skyflash multiphase flow metallurgical furnace is described as follows: after the mixed ore powder is melted in melting chamber 2, the melt flows into the descending pipe vessel 3. The parameters of the descending pipe vessel are designed reasonably, so that the melt flow time in the vessel is 5-7 seconds, and the reduction gas (mainly containing CO and H₂) is injected into the vessel through eight feed nozzles 311, 312, 313, 314, 315, 316, 317 and 318, which are set on the descending pipe vessel, so as to fully reduce the iron oxide in the melt through the rapid reaction between gas and liquid. After the melt enters the molten pool, the reductant, such as pulverized coal and graphite powder, is injected into the molten pool 5 through the side wall inlet 52, and the graphite powder is optimized. If the amount of graphite powder is controlled, the steel with different carbon content can be obtained. If the raw materials required for alloying are added into the molten pool (through 51 or 52), the steel with rich components can be obtained. After the molten pool is connected with the continuous casting and rolling equipment, the steel with rich varieties can be obtained. It should be noted that the number of nozzles in the descending pipe vessel can be set according to the actual needs, not limited to 8.

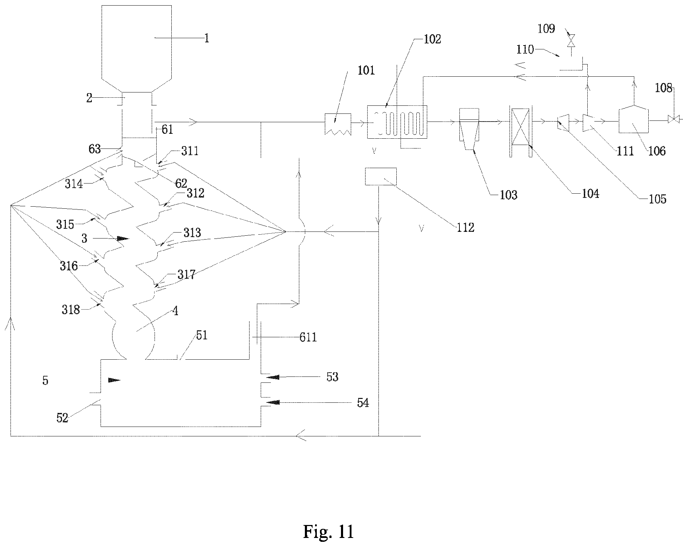

Specific embodiment 3: typical application II of net zero emission steelmaking process constructed with "skyflash multiphase flow metallurgical furnace" as the core equipment. As shown in Figure 11, there are two ways of flue gas discharged from the skyflash multiphase flow metallurgical furnace, namely 61 and 611. After the two ways of flue gas converged, they first enter a dust chamber 101 to remove the large particles of dust. Then the flue gas enters the high-temperature heat exchanger 102. After heat exchange and cooling, the flue gas enters the dust remover 103. After fine dust removal, the flue gas is pressurized to the chemical removal equipment 105 by the fan 104 to remove harmful impurities such as sulfur and get the raw gas. The raw gas then enters the CO₂ removal unit 111 to remove CO₂ from the gas.

The CO₂ separated from the CO₂ removal unit 111 enters the CO₂ storage tank 110. After the CO₂ stored in 110 is adjusted to the required pressure, it is sent to the high temperature heat exchanger 102. After heat exchange and temperature rise, the temperature of CO₂ gas output by the high temperature heat exchanger 102 is over 1000°C, and then the high-temperature CO₂ gas is sent to the CO₂ converter 112 to obtain the high concentration reduction gas.

After removing CO₂ from the CO₂ removal unit 111, the gas containing more than 95% (CO + H₂) is obtained, which is the reduction gas required for smelting, and the gas is sent to gas storage tank 106 for storage. Adjust the gas output from gas storage tank 106 to the required pressure and send it to the high temperature heat exchanger. After the reduction gas is heated by the high temperature heat exchanger, it merges with the high concentration reduction gas output from CO₂ converter 112, and then returns to the skyflash multiphase flow metallurgical furnace.

It should be noted that the high-temperature heat exchanger 102 in this embodiment is a three fluid medium heat exchanger. The heat medium of 102 is the high-temperature flue gas of the skyflash multiphase flow metallurgical furnace. There are two kinds of cold medium of 102, i.e. high concentration CO₂ gas and low-temperature reduction gas (including CO + H₂ > 95%), which respectively enter two mutually isolated flow channels in the high-temperature heat exchanger 102 and can exchange heat with the heat medium. Specific embodiment 4: Smelting copper concentrate with skyflash multiphase flow metallurgical furnace.

The pyrometallurgical smelting of copper concentrate generally requires smelting, converting, refining and other processes to reach copper with high purity. Among them, smelting and blowing are usually carried out in two independent metallurgical equipments. The common smelting furnaces are: flash smelting furnace, Ausmelt furnace, Mitsubishi smelting furnace, ISA furnace, Nolanda furnace, oxygen enriched side blowing furnace; the common blowing furnaces are: PS converter, flash converting furnace, Ausmelt converting furnace.

The skyflash multiphase flow metallurgical furnace can independently complete the smelting and converting processes in the copper smelting process, replacing the functions completed by the copper smelting furnace and the copper converting furnace respectively in the prior art, so as to realize the large-scale reduction of air pollution, production cost, energy conservation and emission reduction.

Adopt the furnace type of the skyflash multiphase flow metallurgical furnace as shown in Figure 5, and the smelting process is as follows:
1) Dry copper concentrate (water content≤0.3%) is mixed and then injected from the top of the melting chamber of the skyflash multiphase flow metallurgical furnace, and oxygen is injected from the fuel spray guns 211 and 213 of the melting chamber. At this time, the sulfur and oxygen of the copper concentrate react with each other to release a large amount of heat and melt the copper concentrate.

The goal of the skyflash multiphase flow metallurgical furnace in this stage is to consume and remove as much sulfur as possible from the copper concentrate, rather than like other copper smelting furnaces, which need to keep part of the sulfur into the copper matte as the heat source for converting. In order to achieve this goal, sufficient oxygen can be injected into the melting chamber (considering the ratio of all sulfur removal). In the design of the melting chamber, the height of the melting chamber space can be properly stretched to increase the retention time of copper concentrate in the space and make the sulfur oxygen reaction more sufficient.
2) The flue gas from the melting chamber is discharged from 61 to produce acid (entering into the traditional acid making process, not detailed).
3) After the copper concentrate passes through the melting chamber, a melt with a temperature of 1300-1500°C has been formed and most of the sulfur has been removed. The melt flows from 62 to the descending pipe vessel. When the melt is melted in the descending pipe vessel, all the sulfur is removed and the copper is reduced.

Specifically, oxygen and flux (such as SiO2) are injected into the descending pipe vessel through the nozzle close to the upper part of the descending pipe vessel. The purpose of oxygen injection is to completely remove sulfur from copper matte and release heat to keep the melt warm; the purpose of flux injection is to slag and reduce the melting point of the melt.

The reductant is injected into the melt through the nozzle in the lower part of the descending pipe vessel. If the reductant is carbon fixation, such as pulverized coal, graphite powder, etc., the added amount shall be controlled so that there is almost no excess after reduction of copper oxide, so as to inhibit the reduction of FeO and make it enter the slag after slagging with the flux. If reducing gas is used as reductant, such as the mixture of CO and H₂, the volume concentration of reducing gas (CO + H₂) must be controlled within the range of 35% - 70%, so as to completely reduce the copper oxide and inhibit the reduction of FeO at the same time. 4) After the melt falls into the molten pool, oxygen and fuel are added into the molten pool through 52 to maintain the high temperature environment of the molten pool and maintain a weak reducing atmosphere in the molten pool. In the molten pool, due to the different density of molten slag and copper water, they precipitated and stratified in the process of flowing, and were discharged from the waste slag discharge port 54 and the metal discharge port 53 respectively.

After the copper concentrate is smelted in the descending pipe vessel, the crude copper with a grade of about 98.5% of copper is obtained, and the residual copper in the slag is less than 0.5%.

In addition, there is a simpler way to smelt copper concentrate into crude copper by adopting the furnace type of skyflash multiphase flow metallurgical furnace shown in Figure 1:
After the copper concentrate enters the melting chamber, a proper amount of oxygen is injected to melt the concentrate. After the concentrate melt flows into the downcomer, oxygen is injected from the feed nozzle 311-316 to remove part of the sulfur in the copper concentrate, so that when the melt leaves the descending pipe vessel, a higher grade of matte (Cu 60% - 90%) is obtained. After the matte enters the molten pool, the coarse copper (Cu 98%) can be obtained by blowing oxygen and adding flux to the inner side of the melt through 52. In this scheme, the melting chamber and the descending pipe vessel of the skyflash multiphase flow metallurgical furnace are similar to the copper smelting furnace, while the melting pool of the skyflash multiphase flow metallurgical furnace is similar to the copper converting furnace.

It is also possible to try to inject a certain amount of oxygen and flux through the feeding nozzles 311-316 of the descending pipe vessel to accurately remove most of sulfur and iron in the copper concentrate, so that crude copper and slag can be obtained when the melt leaves the descending pipe vessel, and only need to be clarified and delaminated in the smelting pool and then discharged separately.

The above embodiments are only preferred ones of the present invention. For those skilled in the art, there will be changes in the specific implementation and application scope according to the present invention. The contents of the present specification should not be construed as limiting the present invention.

## Claims

1. A skyflash multiphase flow metallurgical furnace, **characterized by** comprising an ore bin (1), a melting chamber (2), a descending pipe vessel (3) and a smelting pool (5) which are sequentially communicated from top to bottom; wherein:
the descending pipe vessel is composed of a plurality of obliquely arranged straight pipes or spirally descending curved pipes (6) which are communicated with each other, the adjacent pipes are staggered, and the pipes are provided with feeding nozzles (311, 316),
**characterized in that**
an included angle between the straight pipes and a horizontal plane is less than 45°, and
wherein a tank-shaped rectifying vessel (4) is arranged between the descending pipe vessel and the smelting pool, an upper opening and a lower opening of the rectifying vessel are circular, a diameter D of the lower opening is 0.5 to 1.2 times of a diameter M of the upper opening, and the pipes connected with the upper opening are tangent to the upper opening, so that melt forms a vortex when entering the upper opening.

2. The skyflash multiphase flow metallurgical furnace according to claim 1, **characterized in that** the pipes are all straight, and joints of the pipes are designed into arcs.

3. The skyflash multiphase flow metallurgical furnace according to claim 2, **characterized in that** the spaced pipes in the descending pipe vessel are arranged in parallel.

4. The skyflash multiphase flow metallurgical furnace according to claim 1, **characterized in that** an arrangement direction of the feeding nozzles is opposite to a flow direction of melt.

5. The skyflash multiphase flow metallurgical furnace according to claim 1, **characterized in that** the feeding nozzles are arranged at joints of the adjacent pipes.

6. The skyflash multiphase flow metallurgical furnace according to claim 1, **characterized in that** the melting chamber adopts chemical heating, a lower end of the melting chamber is provided with an ore melting bath, combustion spray guns are arranged on a side wall of the melting chamber, and a lower part or/and a side end of the ore melting bath is/are provided with a discharge port.

7. The skyflash multiphase flow metallurgical furnace according to claim 6, **characterized in that** the combustion spray guns include horizontal spray guns and inclined spray guns, and the horizontal spray guns and the inclined spray guns are arranged alternately.

8. The skyflash multiphase flow metallurgical furnace according to claim 1, **characterized in that** an inclined surface is arranged on the lower one of two adjacent said pipes in the descending pipe vessel and is located at a position corresponding to melt falling from the upper pipe into the lower pipe, and an included angle between the inclined surface and a horizontal plane is θ, 5°≤θ≤25°.

## Patentansprüche

1. Metallurgischer Hochofen mit Mehrphasenströmung, **dadurch gekennzeichnet, dass** er einen Erzbehälter (1), eine Schmelzkammer (2), ein Gefäß mit absteigenden Rohren (3) und ein Schmelzbecken (5) umfasst, die nacheinander von oben nach unten miteinander verbunden sind, wobei:
das Gefäß mit absteigenden Rohren aus einer Vielzahl von schräg angeordneten geraden Rohren oder spiralförmig absteigenden gebogenen Rohren (6) besteht, die miteinander in Verbindung stehen, wobei die benachbarten Rohre versetzt angeordnet sind und die Rohre mit Zuführungsdüsen (311, 316) versehen sind,
**dadurch gekennzeichnet, dass**
ein eingeschlossener Winkel zwischen den geraden Rohren und einer horizontalen Ebene weniger als 45° beträgt, und
wobei ein tankförmiges Rektifiziergefäß (4) zwischen dem Gefäß mit absteigenden Rohren und dem Schmelzbecken angeordnet ist, eine obere Öffnung und eine untere Öffnung des Rektifiziergefäßes kreisförmig sind, ein Durchmesser D der unteren Öffnung das 0,5- bis 1,2-fache eines Durchmessers M der oberen Öffnung beträgt und die mit der oberen Öffnung verbundenen Rohre die obere Öffnung tangieren, so dass die Schmelze beim Eintritt in die obere Öffnung einen Wirbel bildet.

2. Metallurgischer Hochofen mit Mehrphasenströmung nach Anspruch 1, **dadurch gekennzeichnet, dass** die Rohre alle gerade sind und die Verbindungen der Rohre als Bögen ausgebildet sind.

3. Metallurgischer Hochofen mit Mehrphasenströmung nach Anspruch 2, **dadurch gekennzeichnet, dass** die beabstandeten Rohre in dem Gefäß mit absteigenden Rohren parallel angeordnet sind.

4. Metallurgischer Hochofen mit Mehrphasenströmung nach Anspruch 1, **dadurch gekennzeichnet, dass** eine Anordnungsrichtung der Zuführungsdüsen entgegengesetzt zu einer Strömungsrichtung der Schmelze ist.

5. Metallurgischer Hochofen mit Mehrphasenströmung Anspruch 1, **dadurch gekennzeichnet, dass** die Zuführungsdüsen an den Verbindungsstellen der benachbarten Rohre angeordnet sind.

6. Metallurgischer Hochofen mit Mehrphasenströmung nach Anspruch 1, **dadurch gekennzeichnet, dass** die Schmelzkammer chemisch beheizt wird, ein unteres Ende der Schmelzkammer mit einem Erzschmelzbad versehen ist, Verbrennungsspritzpistolen an einer Seitenwand der Schmelzkammer angeordnet sind und ein unterer Teil oder/und ein Seitenende des Erzschmelzbades mit einer Auslassöffnung versehen ist/sind.

7. Metallurgischer Hochofen mit Mehrphasenströmung nach Anspruch 6, **dadurch gekennzeichnet, dass** die Verbrennungsspritzpistolen horizontale Spritzpistolen und geneigte Spritzpistolen umfassen und die horizontalen Spritzpistolen und die geneigten Spritzpistolen abwechselnd angeordnet sind.

8. Metallurgischer Hochofen mit Mehrphasenströmung nach Anspruch 1, **dadurch gekennzeichnet, dass** eine geneigte Fläche auf dem unteren von zwei benachbarten Rohren in dem Gefäß mit absteigenden Rohren angeordnet ist und sich an einer Position befindet, die dem Fallen von Schmelze aus dem oberen Rohr in das untere Rohr entspricht, und ein eingeschlossener Winkel zwischen der geneigten Fläche und einer horizontalen Ebene θ, 5°≤θ≤25° beträgt.

## Revendications

1. Four métallurgique à écoulement multiphasique de type skyflash, **caractérisé par le fait qu'**il comprend un bac à minerai (1), une chambre de fusion (2), une cuve à tuyau descendant (3) et une bassin de fusion (5) qui sont communiquées séquentiellement de haut en bas ; dans lequel :
la cuve à tuyau descendant est composée d'une pluralité de tuyaux droits disposés obliquement ou de tuyaux courbes descendant en spirale (6) qui communiquent entre eux, les tuyaux adjacents sont décalés et les tuyaux sont pourvus de buses d'alimentation (311, 316),
**caractérisé par le fait que**
un angle compris entre les tuyaux droits et un plan horizontal est inférieur à 45°, et
dans lequel une cuve de rectification en forme de réservoir (4) est disposée entre la cuve à tuyau descendant et le bassin de fusion, une ouverture supérieure et une ouverture inférieure de la cuve de rectification sont circulaires, un diamètre D de l'ouverture inférieure est de 0,5 à 1,2 fois un diamètre M de l'ouverture supérieure, et les tuyaux reliés à l'ouverture supérieure sont tangents à l'ouverture supérieure, de sorte que la matière en fusion forme un tourbillon lorsqu'elle pénètre dans l'ouverture supérieure.

2. Le four métallurgique à écoulement multiphasique de type skyflash selon la revendication 1, **caractérisé par le fait que** les tuyaux sont tous droits et que les joints des tuyaux sont conçus en forme d'arcs.

3. Four métallurgique à écoulement multiphasique de type skyflash selon la revendication 2, **caractérisé par le fait que** les tuyaux espacés dans la cuve à tuyau descendant sont disposés en parallèle.

4. Le four métallurgique multiphase à écoulement en ciel selon la revendication 1, **caractérisé par le fait qu'**une direction de disposition des buses d'alimentation est opposée à une direction d'écoulement de la matière fondue.

5. Le four métallurgique à écoulement multiphasique de type skyflash selon la revendication 1, **caractérisé par le fait que** les buses d'alimentation sont disposées au niveau des joints des tuyaux adjacents.

6. Le four métallurgique à écoulement multiphasique de type skyflash selon la revendication 1, **caractérisé en ce que** la chambre de fusion adopte un chauffage chimique, une extrémité inférieure de la chambre de fusion est pourvue d'un bain de fusion de minerai, des pistolets de combustion sont disposés sur une paroi latérale de la chambre de fusion, et une partie inférieure ou/et une extrémité latérale du bain de fusion de minerai est/sont pourvue(s) d'un orifice de déchargement.

7. Le four métallurgique à écoulement multiphasique de type skyflash selon la revendication 6, **caractérisé par le fait que** les pistolets de combustion comprennent des pistolets de pulvérisation horizontaux et des pistolets de pulvérisation inclinés, et que les pistolets de pulvérisation horizontaux et les pistolets de pulvérisation inclinés sont disposés en alternance.

8. Le four métallurgique à écoulement multiphasique de type skyflash selon la revendication 1, **caractérisé en ce qu'**une surface inclinée est disposée sur la partie inférieure de deux tuyaux adjacents dans la cuve à tuyau descendant et est située à une position correspondant à la chute de la matière fondue du tuyau supérieur dans le tuyau inférieur, et un angle compris entre la surface inclinée et un plan horizontal est θ, 5°≤θ≤25°.
